# EUROPEAN PATENT APPLICATION

(11) **EP 2 631 987 A1**
(43) Date of publication of application: **28.08.2013**
(21) Application number: 12156800.0
(22) Date of filing: 24.02.2012
(51) Int. Cl.: H01M 10/54

(54) **Metal ion recovery from battery waste using ammonia**

(71) Applicant: Rec Alkaline Oy, 85500 Nivala (FI)
(72) Inventor: Tynjälä, Pekka, 67100 Kokkola (FI); Kauppinen, Toni, 67100 Kokkola (FI); Lassi, Ulla, 67100 Kokkola (FI); Pudas, Jarmo, 85500 Nivala (FI); Irpola, Kimmo, 02360 Espoo (FI)
(74) Representative: Pálsson, Ingólfur

(57) **Abstract**

Present invention relates to a novel and efficient method for recovery of metals present in spent alkaline batteries.

## Description

### Field of the invention

The present application relates to processes for recovery and recycling of metals found in spent alkaline batteries. Thus the processes and methods described herein primarily relates to spent alkaline batteries as opposed to e.g. re-chargeable lithium based batteries.

### Background of the invention

Alkaline batteries make up about 80% of all collected spent batteries. Consequently, there is a need and interest of finding process for recovery of the metals used in alkaline spent batteries. Alkaline batteries are primarily batteries consisting mainly of zinc/zinc oxide and manganese dioxide (Zn/ZnO andMnO₂). In the alkaline battery, the anode (negative) is made of zinc powder, which gives more surface area for increased current, and the cathode (positive) is composed of manganese dioxide. In the alkaline battery cell (nominal voltage of a fresh alkaline cell is 1.5 V), there is an alkaline electrolyte of potassium hydroxide whereas zinc-carbon batteries have acidic electrolytes.

Half-reactions in the cell are:

Zn (s) + 2OH- (aq) → ZnO (s) + H₂O (I) + 2e-

2MnO₂ (s) + H₂O (I) + 2e- →Mn₂O₃ (s) + 2OH- (aq)

On the other hand, dissolution of manganese oxides such as Mn₂O₃ and Mn₃O₄ is partial because MnO₂ produced is insoluble.

Mn₂O₃ + H₂SO₄ → MnO₂ + MnSO₄ + H₂O

Mn₃O₄ + H₂SO₄ →MnO₂ + 2MnSO₄ + 2 H₂O

Hence, a reducing agent is required to leach all manganese. The reduction of manganese dioxide and hydrogen peroxide in acidic solution is given as follows:

MnO₂ + H₂SO₄ + H₂O₂ → MnSO₄ + 2H₂O + O₂

Previous related methods presented in the art are exemplified by e.g. EP0620607 Relating to a process in which spent batteries are crushed and the crushed particles are thereafter magnetically treated to separate ferrous material from Hg, Mn, Zn, Cd or Ni. Insoluble residues are then removed by a flotation process. The remaining solid residue is treated with a sulphuric acid solution adjusted to a pH of 2.5-4 to remove Hg. After removal of Hg, the remaining solution is further acidified by addition of more sulphuric acid. The solution is then subjected to electrolysis in which Zn is deposited on the cathode and Mn is deposited on the anode (which is thus the separation of the desired metals).

A further publication, WO 03021708, relates a process in which used cells are crushed and magnetically separated, or being subjected to a thermal treatment, are treated by alkalic attrition to remove any soluble salts (e.g. chlorides). The remaining solid is then leached by sulphuric acid under ultrasonication in presence of a reducing agent (such as e.g. hydrogen peroxide). From the solution is then removed Hg by addition of 2,5.dimercaptothiadiazol or Zn powder). Thereafter heavy metals are removed by Zn cementation (Zn powder under hot thermal conditions). Finally Zn and Mn are separated from of basic or neutral salts (Mn as MnCO₃ and Zn as a Zn-ammonia complex).

In WO 05101564 relating to recycling of Li-batteries having an Li-anode and a cathode of Co, Ni, Mn or Fe. The batteries a cry crushed under an inert atmosphere (Argon and/or carbon dioxide). Magnetically separating (to remove any ferrous material) and thereafter hydrolysis in aqueous solution. The lithium metal is precipitated either as lithium phosphate or hexaflurophosphate. It appears that the remaining metals from the cathode are extracted from a 2N sulphuric acid solution at 80C in presence of steel shots, where the ratio of steel shots and powder (from the cathode) is 0.15 and the metals are collected by electrolysis.

An alternative route may be according to an article by Ferella et al. Journal of Power Sources 183 (2008) 805-811, suggesting a route where zinc is leached from crushed alkaline batteries using H₂SO₄ and the remaining carbon and manganese is roasted at 900°C to produce manganese oxides and disposing the carbon residual as carbon dioxide. The zinc solution will contain zinc and sulfuric acid. The article suggests an electro winning (or electroextraction) route for zinc.

However all of the above methods either use electrolysis or use Zn power making them commercially less interesting. Consequently, there is a need for an efficient and cost effective method for recovery of metals present in alkaline batteries.

### Description of the invention

Present invention relates to methods for recovery of metals from recycled spent alkaline batteries. Specifically the metals can be e.g. zinc and/or manganese.

In the process of recovery of metals from alkaline batteries a sorting process may optionally be employed as a first step. Such a sorting process has the aim of separating alkaline batteries from any other kinds of batteries such as e.g. re-chargeable lithium batteries. A sorting process that may be employed for this purpose is exemplified in PCT/EP2011/053963.

In short this process can be described as a batch of mixed batteries entering the process. However, the batches with batteries may also contain non-battery items such as electronic devices containing batteries. Other assorted waste may also be present in these in the batch.

In a first step, the large waste mass to be recycled is sorted manually, to separate batteries from other electronic waste material.

Secondly different types of batteries are sorted and separated from alkaline batteries. These battery types may be lead-, Li-lon polymer-, Ni-Cd-, mercury-, Ni-Metal Hydride-, larger lithium primary, small Lithium primary batteries.

In a third step, the raw material is subjected to a sieve (shaking) system removing so called button cell batteries. This process removes the small lithium primary batteries, also known as button cell batteries. These are round, approximately a half inch in diameter and an eighth of an inch in width. They are used in many consumer electronic products, such as some cameras.

The button cell batteries are removed by passing through a metal "sieve." This sieve consists of approx. 15 V-shaped metal ridges, which are all connected such that the same piece of metal forms the left side of one ridge and the right side of another ridge. The left and right sides are at an approximately 45 degree angle such that any small object would fall to the middle of each ridge. The side of each ridge is approximately one inch long. The bottom of each ridge, what one could call the bottom of the "V," is empty. It is an open slot approximately one-quarter of an inch wide. Thus any small button cell battery which was on top of the "V" would slide to the bottom of the ridge, and then through it.

The metal bars which form the left side of one "V" and the right side of another are approximately each 10 feet long. These metal bars are placed directly next to the rubber conveyer belt of equal width. The batteries, when they first come into the plant, are placed on this conveyer belt and sorted as described above.

During the manual sorting step as described above, the smaller lithium button cell batteries are not dealt with. They remain on the conveyer belt and thus pass from the conveyer belt to the metal "V" shaped ridges. The bars which form the sides of the ridges shake at a moderate pace. This encourages the smaller batteries to fall to the bottom of the ridge and then through the ridge. They then fall into boxes placed below the ridge.

Larger items do not fall though the ridges. These are alkaline batteries. Thus, because everything has been removed the process also sorts alkaline batteries.

### Crush

To begin this process the batteries are put on a flat, rubber conveyor belt. This conveyer belt is approximately 20 feet long. The batteries fall off the end of the conveyor belt onto another rubber conveyor belt.

This second rubber conveyor belt is tilted upward at an approximately 45 degree angle. Every approximately 1.5 feet this conveyor belt has a slap of rubber attached to it. This slab is approximately 2 inches in height, is as long as the conveyor belt is wide, and is attached to the conveyor belt. This rubber slab picks up the batteries as they fall off the flat rubber conveyor belt. The second rubber conveyor belt is approximately 20 feet long. It takes the batteries this distance, where they fall into the first metal crusher.

### First step

The first crusher crushes the batteries at 100-400 revolutions per minute. These batteries are crushed by a device with teeth or blades of approximately 8 inches long. The blades or teeth go into each battery, breaking the batteries into pieces.

A computer monitors and adjusts the speed of the crusher so the result is battery pieces of the right size.

This process crushes the batteries so that they are in pieces. Each piece is approximately 0.5 - 1.0 inches long (about 1.25 cm to about 2.5 cm).

The temperature inside the chamber where the batteries are crushed reaches only 40-50 degrees Celsius.

As the batteries are crushed hydrogen and oxygen are released from the batteries. Optionally, the released hydrogen and oxygen may be removed from the process. These gases mix with the air current the cyclone and are sucked out, as described below. Oxygen can cause a fire. Removing the oxygen therefore significantly lowers the risk of fire.

Moreover the low temperature of this process also reduces the risk of fire. The air surrounding the crushing step is sucked up in a cyclone process expelling the air. The cyclone process pulls out metals still in dust. This consists of a spinning blade at the top of a chamber which is tapered so it gets narrower as the gases moves towards the bottom of the chamber. This creates a tornado-like effect which blows the air containing the gases down, through the chamber, and out of the chamber. The air containing the gases that has passed through the cyclone then goes to a filter. The air also contains may contain also light plastic or cardboard, which may be a battery component. It may be beneficial for the following process to have this material removed.

The expelled air, which contains the hydrogen and oxygen, then goes into a tube which is connected to the outside atmosphere. A second filter catches any remaining particles, insuring that what is released to the atmosphere is only normal air, plus the hydrogen and oxygen present in the batteries.

This mixture of light plastic and cardboard may be added to the process of recycling Nickel Metal Hydride batteries as these small particles of plastic and paper may serve as attachment points of small particles of metals. This light plastic and cardboard may thus be thus be included along with the other parts of the recycled nickel metal hydride batteries, to a nickel smelter. Even very small amounts of other metals such as e.g. cobalt (2-4%) in the mixture, can thus be recycled.

At the end of the crushing chamber is a screen. This is adjusted so particles of different sizes can pass though. In this way the size of the battery pieces are regulated, making sure that only those that are small enough can pass through.

After passing through this first crushing chamber, the mix of battery pieces and dust passes into a tube. This tube is approximately 10 inches in diameter and is air-tight. The pieces and dust mixture will pass through this tube to the second crushing chamber, during which the dust is in this tube it is cooled down to room temperature.

### Second crusher

The transfer tube brings the dust to a second crusher. This crusher is of the same basic design as the first crusher but is made to operate at higher speed. It turns at 1,000-1,200 revolutions per minute. This is the stronger crusher of the two crushers. It reduces the battery pieces to up to 6 mm in size.

The dust produced in this process is collected in a second cyclone. This second cyclone has two dust filters. Each dust filter is the same as the second filter from the first cyclone, as described above.

After crushing the remainder of the batteries, which are now a powder, moves along a device which could be called a "shaker-mover." It slowly shakes the powder in a way which causes it to move forward. The powder moves along a shaking conveyer belt. It moves along this belt for approximately 2.5 meters. While the powder is on this conveyer belt it passes under the magnetic separator in order to separate any ferrous material from the powder.

### Magnetic separator

The magnetic separator pulls the iron from the powder. This iron is in the form of flakes. The magnetic separator is positioned about 25 cm above the shaking conveyor belt. The magnetic separator is approximately a half meter wide and two and a half meters long. The key component of the magnetic separator is a magnet. The iron flakes are attracted to this magnet. As the iron flakes leave the powder and instead attach themselves to the magnet they are removed from the powder.

Below the magnet is a belt. The magnet behind the belt attracts and then holds the iron flakes onto the belt. The belt moves approx. 40 centimetres at which point it ends. When the belt ends there are no more magnets. The flakes then fall off the belt and are collected.

The starting material for the method according to the invention is Alkaline Black mass (denoted AB), which has been produced through dismantling and magnetic separation of iron metals as described above. The AB powder is a mixture of the cathodic (manganese oxide and graphite) and the anodic (zinc oxides and electrolytic solution) materials. The resulting material may optionally undergo a pre-treatment method in order to remove any no metallic material present in the batteries. These may be e.g. plastic films, paper pieces, electric wires etc from the dismantling operation non-woven cellulose or synthetic polymers. However, the material may also not be pre-treated in any way before use, and hence the material still contained plastic films, paper pieces, electric wires etc from the dismantling operation. The AB is then subjected to different methods to separate metals in the spent alkaline batteries. In its initial form the AB powder may have initial concentration of e.g. aluminum (in an amount of such as e.g. 1.2%), e.g. Iron (in an amount of e.g. 0.6%), manganese (in an amount e.g. 30%) and zinc (21.8 %).

The possible schematic routes to separation are e.g. as follows:

### A) Metals dissolution, H₂S + Na₂CO₃ to produce ZnS and MnCO₃

In this process the metals will be leached in H₂SO₄ solution in combination with H₂O₂ and/or SO₂. After the leaching the solution will be filtrated to remove carbon and other insoluble materials. Using H₂S gas ZnS can be precipitated from the solution at pH ∼ 2. A filtration step is again needed to separate ZnS from the solution. The remaining manganese solution can be treated with Na₂CO₃ to precipitate MnCO₃. This method works well and it is possible to optimize for either ZnS or MnCO₃ purity by adjusting the pH at the ZnS precipitation step.

### B) Metals dissolution, NaOH to produce zinc and manganese hydroxides

The pH is elevated in steps after the dissolution of the metals. Zinc and manganese will precipitate at different pH values as hydroxides. The zinc will precipitate at a pH of about 7 while most manganese is still in solution. All manganese will have precipitated at pH 10.

### C) Metals dissolution, Na₂S or NaHS and Na₂CO₃ to produce ZnS and MnCO₃

This route may be used to precipitate zinc as ZnS and manganese as MnCO₃.By optimization of the parameters with respect to filtering and filter cakes such as e.g. number of washings, pH of washing solutions etc, as precipitation of the respective zinc and manganese salts result.

### D) The precipitation of Mn as MnO₂ using Caro's acid

This route aims to precipitate Manganese as MnO₂ from the metals dissolution step using Caros's acid which is 26 % H₂SO₅, 58 % H₂SO₄ and 2 % H₂O₂ (according to preparation instructions from the literature). In this way the zinc containing solution could be sold and no waste water is left on the plant.

### E) The precipitation of Mn as MnO₂ by using O₂/SO₂

This is another possibility to remove manganese from the leaching solution. After the metals dissolution step O₂/SO₂ is used to precipitate Mn as MnO₂, leaving a zinc containing solution. Thus there is no need to remove any waste water. This technique may be used for purification of solutions containing small amounts of manganese, such as e.g. in solutions containing residues of manganese or solutions which may have undergone any of the methods described herein wherein the majority of manganese have been removed and the method of E) is used as a complement to fully remove all manganese if required.

### F) Leaching/extraction

Extraction is known as an effective method to separate and remove metal cations in aqueous sulphate solutions, e.g. after leaching of zinc and manganese with a sulphuric acid solution. The extraction can be conducted by using appropriate extractants, such as organic compounds.or new advanced chemicals.

### Detailed description of the invention

Alkaline batteries make up about 80% of the collected batteries. They are primary batteries containing mainly of zinc/zinc oxide and manganese dioxide (Zn/ZnO andMnO₂). In the alkaline battery, the anode (negative) is made of zinc powder, which gives more surface area for increased current, and the cathode (positive) is composed of manganese dioxide. In the alkaline battery cell (nominal voltage of a fresh alkaline cell is 1.5 V), there is an alkaline electrolyte of potassium hydroxide whereas zinc-carbon batteries have acidic electrolytes.

Half-reactions in the cell are:

Zn (s) + 2OH- (aq) → ZnO (s) + H2O (l) + 2e-

2MnO₂ (s) + H₂O (I) + 2e- → Mn₂O₃ (s) + 2OH- (aq)

Spent alkaline batteries are collected and may optionally be sorted prior to further actions in order to have alkaline batteries only as the starting material for preparation of the alkaline black mass. Alkaline batteries are crushed to alkaline black mass (BM) in a mechanical process. Alkaline BM is produced in the recycling process of alkaline batteries. Iron is separated magnetically from the alkaline BM prior to the leaching process.

### Alkaline black mass as a raw material

Alkaline BM powder is a mixture of cathodic (manganese oxide and graphite) and anodic (zinc oxides and electrolytic solution) materials. In general it contains the following main metals; Al 1.2 %, Fe 0.6 %, Mn 30.0 % and Zn 21.8 % (vol%). However, it is to be clearly understood that any alkaline BM can be used according to the invention and in particular wherein the majority of metal content is Mn and/or Zn. The average particle size of alkaline BM is 250-500 µm. Metals are known to be concentrated on the smaller fractions, however the method presented herein is suitable of use on any particle sizes raging from e.g. 0 to about 4000 µm, such as e.g. about 20 µm to about 3000 µm, such as e.g. about 60 µm to about 2000 µm, such as e.g. 125 µm to about 1000 µm, such as e.g. about 250 µm to about 500 µm. However, any particle sizes up to about 0.6 mm may be used in a process according o the invention. In the method according to the invention it is beneficial to have a small particle size so as to speed up the reaction in dissolving the metals present in the alkaline black mass. Even though, the alkaline black mass may be used as is, the method may also involve any technique resulting in a smaller particle size, such as e.g. grinding of the alkaline black mass prior to the dissolution step of the metals.

As mentioned above, any ferrous material is removed magnetically as described above.

The vast majority of alkaline batteries contain mainly zinc and manganese in larger amounts. Thus present invention is mainly concerned with recovery of these metals. However, the inventive concept of this invention may very well be applied mutatis mutandis to other metals in recovery process not only limited to batteries, but in other recycling operations of any kind.

In a process according to the invention metals present in the AB mass may be recovered according to:
a) Providing alkaline black mass;
b) washing the alkaline black mass with deionised water;
c) optionally subjecting the washed alkaline black mass to gas phase reduction;
d) leaching the alkaline black mass with a base;
e) filtrating the resulting mix from step d) in order to collect precipitated zinc salt;

The process may further be combined/continued with any of steps f) to i) according to:
f) subjecting the solid residue from step e)collected in the filtration step to reductive leaching by an acid in the presence of a reducing agent;
g) filtering the resulting acidic mix and purifying the filtrate by adding a base or precipitating agent;
h) removing any precipitates from step g);
i) precipitating manganese carbonate from the filtrate by addition of a carbonate base.

Consequently, the process may comprise the steps of:
a) providing alkaline black mass;
b) washing the alkaline black mass with deionised water;
c) optionally subjecting the washed alkaline black mass to gas phase reduction;
d) leaching the alkaline black mass with a base;
e) filtrating the resulting mix from step d) in order to collect precipitated zinc salt;
f) subjecting the solid residue from step e)collected in the filtration step to reductive leaching by an acid in the presence of a reducing agent;
g) filtering the resulting acidic mix and purifying the filtrate by adding a base or precipitating agent;
h) removing any precipitates from step g);
i) precipitating manganese carbonate from the filtrate by addition of a carbonate base.

The chemical pathways to recovery of Zn and Mn.

According to the invention a method is presented based on basic reductive leaching system, based on ammonia (NH₃). Zinc oxides can be dissolved by ammonia according to:

ZnO + 2NH₄⁺ + 2NH₃ → Zn(NH₃)₄²⁺ + H₂O

Zn(OH)₂ + 2NH₄⁺ + NH₃ → Zn(NH₃)₄²⁺ + H₂O

Zn + NH₄⁺ + 2NH₃ → Zn(NH₃)₄²⁺ + H₂

The advantage of the ammonia in leaching of metals is the high selectivity. Ammonia is capable of dissolving zinc from the alkaline black while manganese as well as iron remain unleached. Ammonia forms a complex with zinc at pH ranging from 8 to 11 according to the equation above.

Liquid/solid ratio at the beginning of the leaching may be e.g. about 10:1 or may be e.g. about 9:1, such as e.g. about 8:1, such as e.g. about 7:1, such as e.g. about 6:1, such as e.g. about 5:1, such as e.g. about 4:1, such as e.g. about 3:1, such as e.g. about 2:1, such as e.g. about 1:1. Ammonium sulphate is added to the solution to give a determined (NH₄)₂SO₄ concentration which is about 0,4 M ]. pH is adjusted to a desired level with 25 % ammonia solution to be in the range of 8 to 12. The leaching time is 2 hours. However, even shorter leaching periods may be applicable such as e.g. about 1 hour, or such as e.g. about 50 minutes, such as e.g. about 40 minutes, such as e.g. about 30 minutes, such as e.g. about 20 minutes. Longer reaction times may also be applied, such as e.g. about 12 hours or shorter, such as e.g. about 10 hours, such as e.g. about 8 hours, such as e.g. about 6 hours, such as e.g. 4 hours, such as e.g. about 3 hours.

In order to further increase the yield of zinc, the process of ammonia leaching may optionally be carried out a second or even a third time.

### Precipitation of zinc

The water soluble ammonia complexes formed during the leaching are decomposed by evaporation of ammonia accompanied with decrement of pH value of the solution. During the evaporation step the solution is heated at 60-100 °C. Optionally, vacuum can be applied in order to enhance the evaporation of ammonia. Zn(OH)₂ is precipitated containing ca. 50 % zinc. Subsequently the precipitate is separated from the solution by filtration. The remaining waste solution contains ammonium sulphate, ammonia as well as small amounts of metals. Evaporated NH₃ can be recovered and re-used in next batch.

Prior to the ammonia leaching, as an optional process step, a reductive 5-10 % H₂/N₂-treatment carried out by passing the gas through a heated chamber over the AB mass at appropriate temperature, such as 300-700 °C for 2-5 hours, may be used to reduce manganese as well as to convert zinc manganese oxide(ZnMn₂O₄ to zinc oxide and manganese oxide. Zinc oxide can be easily dissolved in ammonia. The purpose of the above treatment is both to increase the zinc yields during the ammonia leaching and subsequently reduce the need for zinc removal after the reductive acid leaching.

### Reductive Leaching

Reductive leaching is used for the leaching of all metals that remain in the alkaline black: manganese, remaining zinc and iron. The leaching process is carried out by using sulphuric acid as a leaching agent. Metals are dissolved in sulphuric acid according to the following equations:

MnO + H₂SO₄ → MnSO₄ + H₂O

Mn₂O₃ + H₂SO₄ → MnO₂ + MnSO₄ + H₂O

Mn₃O₄ + 2H₂SO₄ → MnO₂ + 2MnSO₄ + H₂O

ZnO + H₂SO₄ → ZnSO₄ + H₂O

Alkaline black contains some oxidized manganese (MnO₂) as well as ZnMn₂O₄. Therefore, a reductive agent is required in order to achieve complete dissolution. In the alkaline black there are also present compounds like Mn₂O₃ and Mn₃O₄ that are only slightly soluble and that form more MnO₂ to the process. An appropriate reducing agent to be used in this step is for example citric acid. Manganese oxide is leached in sulphuric acid and citric acid solution by following equation:

9*MnO*₂ + 9*H*₂*SO*₄ + *C*₆*H*₈*O*₇ → 9*MnSO*₄ + 13*H*₂*O* + 6*CO*₂

The remaining material after the reductive leaching can be utilized in the energy production, e.g. by combustion.

### Precipitation of remaining zinc and iron from the acidic solution

The purpose of this process step is to remove all remaining impurities from the solution allowing the subsequent precipitation of manganese carbonate with a very high purity. The precipitation of impurities is carried out with 6 M NaOH solution at the pH of ca. 6,5 and at the temperature of 40 °C.

As an option, 1 M Na₂S solution may be used as precipitation agent in order to remove zinc from the solution as zinc sulphide. Manganese and iron containing solution is separated by filtration. Precipitated zinc sulphide is either waste or sellable product. Iron is removed by oxidation at the pH of 2.5-5.5 and at the temperature of 40 °C.

### Precipitation of manganese

After the previous step the precipitated impurities and remaining solution are separated by filtration. Manganese carbonate is precipitated from the manganese sulphate solution with 2 M sodium carbonate solution at the temperature of 40 °C.

In the reduction step a reducing agent (e.g. hydrogen peroxide or SO₂) is required to leach all manganese from the sample. In this process other reducing agents may be used, such as e.g. citric acid, oxalic acid or isocitric acid etc. The reduction of manganese dioxide and hydrogen peroxide in acidic solution is given as follows:

MnO₂ + H₂SO₄ + H₂O₂ → MnSO₄ + 2H₂O + O₂

There are several possibilities in the literature to recover Zn and Mn from spent alkaline batteries, e.g. dissolution with sodium compounds, liquid-liquid extraction. In present invention it has been surprisingly found that dissolution of alkaline BM in the presence of H₂SO₄ and citric acid as a reducing agent followed by sequential precipitation results in a high yielding, environmentally friendly and safe process. This method also avoids the use of hydrogen peroxide which may be disadvantageous to use in larger scales for reasons of process safety and aspects of environment.

According to the method of present invention, the ammonia leaching may be performed using ammonia in a concentration of 0.1 M to about 10 M, such as e.g. about 0.5 M to about 8M, such as e.g. about 1 M to about 6M, such as about 2M to about 4M, or the ammonia solution may be of a concentration of at least 0.5M, such as e.g. at least about 1 M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M. Moreover depending on the need to dissolve the metal, the concentration of the ammonia solution may be e.g. about 1M or such as e.g. about 2M, such as e.g. about 3M, such as e.g. about 4M, such as e.g. about 5M, such as e.g. about 6M, such as e.g. about 7M, such as e.g. about 8M, such as e.g. about 9M, such as e.g. about 10M.

During the ammonia-leaching step, ammonium sulphate may be added with the ammonia solution. The concentration of the ammonium sulphate may be e.g. 0.1 M to about 10 M, such as e.g. about 0.5 M to about 8M, such as e.g. about 1M to about 6M, such as about 2M to about 4M, or the ammonium sulphate may be of a concentration of at least 0.5M, such as e.g. at least about 1 M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M. Moreover depending on the need to dissolve the metal, the concentration of the ammonium sulphate solution may be e.g. about 0.01 M or such as e.g. about 0.1M, such as e.g. about 0.2 M, such as e.g. about 0.4 M, such as e.g. about 0.5 M, such as e.g. about 1M, such as e.g. about 2M, such as e.g. about 4M, such as e.g. about 8M, such as e.g. about 10M.

The pH of the solution wherein zinc is precipitated as a zinc-ammonium complex is e.g. in the range of e.g. about pH =6, to about pH = 14, such as e.g. about pH = 7 to about pH = 13, such as e.g. about pH =8 to about pH = 12, or such as e.g. about pH = 8 to about pH = 11, such as e.g. about pH = 9 to about pH = 10

The reaction temperature during ammonia leaching may be e.g. about 100°C such as e.g. about 90°C, such as e.g. about 80°C, such as e.g. about 70°C, such as e.g. about 60°C, such as e.g. about 50°C, such as e.g. about 40°C, such as e.g. about 30°C or such as e.g. about 20°C.

The reaction time during ammonia leaching may be in the range of e.g. about e.g. about 30 minutes to about 24 hours, such as e.g. about 1 hour to about 10 hours, such as e.g. about 2 hours to about 3 hours, such as e.g. about 2 hours to about 9 hours such as e.g. about 3 hours to about 8 hours, such as e.g. about 4 hours to about 7 hours, such as e.g. 5 hours to about 6 hours, or it may be about e.g. 2 hours, about e.g. 3 hours, about e.g. 4 hours, about e.g. 5 hours.

Prior to the ammonia leaching, as an optional process step, a reductive gas-phase treatment may be employed. One or more gases may be employed for this purpose. Preferably hydrogen may be mixed with one or more inert gases such as e.g. nitrogen or argon or mixtures thereof. Typically a gas-mix of about 1-50% of hydrogen in an inert gas may be employed such as e.g. about 5-45% of hydrogen in an inert gas, such as e.g. 10-40% of hydrogen in an inert gas, such as e.g. 20-30% of hydrogen in an inert gas such as e.g. about 5-10 % hydrogen in inert gas, at appropriate temperature. Suitable temperatures may be e.g. about 200 to about 800°C, such as e.g. about 300 to about 700 °C, such as e.g. about 400 to about 500 °C. Suitable reaction temperatures may be about 1-10 hours, such as e.g. about 2-5 hours, or such as e.g. 2-8 hours, such as e.g. about 3-7 hours.

According to the method of present invention the leaching process may be performed by the use of an acid in order to dissolve the metals in the alkaline black mass. The acid may be any organic or inorganic acid and may typically be an oxoacid. Oxoacids acids or of organic or inorganic origin containing at least one oxygen atom, containing at least one other element, has at least one hydrogen atom bound to oxygen and form an ion upon loss of one or more hydrogen atoms (protons). Examples of oxoacids are, but not limited to, a carboxylic acids, sulphuric acid, persulphuric acid (also known as peroxymonosulfuric acid), a sulphonic acid, a sulphinic acid, nitric acid, nitrous acid, phosphoric acid, hypochlorous acid, chlorous acid, chloric acid, perchloric acid, perbromic acid, metaperiodic acid. It is envisaged that the acids are used as an aqueous solution in various concentrations, but may also be in solution of mixtures of solvents of both organic and inorganic origin as long as solvent is inert to the reaction conditions. Moreover, it is also envisaged that the acid may be attached to a solid resin such as e.g. a polymer or matrix.

The concentration of the solution of the acid used in the leaching process may be in the range of about 0.1 M to about 10 M, such as e.g. about 0.5 M to about 8M, such as e.g. about 1M to about 6M, such as about 2M to about 4M, or the acid solution may be of a concentration of at least 0.5M, such as e.g. at least about 1M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M. Moreover depending on the need to dissolve the metal, the concentration of the acid in solution may be e.g. about 1M or such as e.g. about 2M, such as e.g. about 3M, such as e.g. about 4M, such as e.g. about 5M, such as e.g. about 6M, such as e.g. about 7M, such as e.g. about 8M, such as e.g. about 9M, such as e.g. about 10M.

The pH of the leaching solution during which the metal is to be dissolved may be in the range of e.g. about pH = -1 to about pH = 6, such as e.g. about pH = 0 to about pH = 5, such as e.g. about pH = 2 to about pH = 4, such as e.g. about pH = 2 to about pH = 3, or such as e.g. about pH = 1 to about pH = 2, such as e.g. about pH = 2 to about pH = 3, such as e.g. about pH = 3 to about pH = 4, or such as e.g. about pH = 4 to about pH = 5.

The leaching process may be performed in a ratio of the alkaline black mass to acid (measured as weight to weight % ratio; w/w %) of e.g. about 1 w/w%, such as e.g. about 5 w/w%, such as e.g. about 10 w/w%, such as e.g. about 15 w/w%, such as e.g. about 20 w/w%, such as e.g. about 25 w/w%, v such as e.g. about 30 w/w%, such as e.g. about 40 w/w%, such as e.g. about 50 w/w%, such as e.g. about 60 w/w%, such as e.g. about 70 w/w%, such as e.g. about 75 w/w%, as long as the molar equivalence of the acids is enough to dissolve the metals.

The temperature of the reaction mixture during the leaching process may be in the range of e.g. about 5°C to about 100°C, such as e.g. about 10°C to about 90°C, such as e.g. about 20°C to about 80°C, such as e.g. about 30°C to about 70°C, such as e.g. about 40°C to about 60°C, or such as e.g. about 40°C to about 50°C, such as e.g. about 30°C to about 60°C, or about 30°C, about 40°C, about 50°C, about 60°C, about 70°C, about 80°C, about 90°C, about 100°C.

The reaction time during the leaching process may be in the range of any time to completely or almost completely dissolve the metals of the alkaline black mass. Such time ranges may be in the range of e.g. about 30 minutes to about 24 hours, such as e.g. about 1 hour to about 10 hours, such as e.g. about 2 hours to about 3 hours, such as e.g. about 2 hours to about 9 hours such as e.g. about 3 hours to about 8 hours, such as e.g. about 4 hours to about 7 hours, such as e.g. 5 hours to about 6 hours.

The reaction during the leaching step (i.e. the dissolution of the metal content of the alkaline black mass may optionally be performed in the presence of a gas such as e.g. oxygen (O₂) or sulphurdioxide (SO₂).

During the leaching process a reducing agent may optionally be present in order to reduce any insoluble metal oxides formed by reaction of the acid (such as e.g. sulphuric acid). The reducing agent may be e.g. hydrogen peroxide (H₂O₂) or SO₂, or it may be e.g. a carboxylic acid (mon-, di- or tri- carboxylic acid) such as e.g. perbenzoic acids such as metha-chloroperbenzoic acid, citric acid, oxalic acid, malonic acid, maleic acid, fumaric acid, succinic acid, glutaric acid, adipic acid, pimelic acid, suberic acid, azaleic acid, tartaric acid, isocitric acid, aconitic acid, propane-1,2,3-tricarboxylic acid or trimesic acid or any combinations thereof.

The concentration of the reducing agent may be in the range of about e.g. 0.01 M to about 10 M, such as e.g. about 0.1 M to about 9M, such as e.g. about 0.12 M to about 8.5 M, such as e.g. about 0.125 M to about 8.45 M, such as e.g. 0.5 M to about 8M, such as e.g. about 1M to about 6M, such as about 2M to about 4M, or may be of a concentration of at least 0.5M, such as e.g. at least about 1M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M.

The leaching process may be performed in a ratio of the alkaline black mass to reducing agent (measured as weight to weight % ratio; w/w %) of e.g. about 1 w/w%, such as e.g. such as about 2 w/w %, such as e.g. about 3 w/w%, such as e.g. about 5 w/w%, such as e.g. about 10 w/w%, such as e.g. about 15 w/w%, such as e.g. about 20 w/w%, such as e.g. about 25 w/w%, v such as e.g. about 30 w/w%, such as e.g. about 40 w/w%, such as e.g. about 50 w/w%, such as e.g. about 60 w/w%, such as e.g. about 70 w/w%, such as e.g. about 75 w/w%, as long as the molar equivalence of the acids is enough to dissolve the metals.

At the completion of the leaching process, the entire metal content is in solution or at least about 60%, or at least about 70%, or at least about 80%, or at least about 85%, or at least about 90%, or at least about 95%, or at least about 100% of the metal content is in solution, i.e. have been converted to their respective cations in solution. It is to be clearly understood that of the metals present in the alkaline black mass, the dissolution percentages between the different metals may vary such that e.g. 85% of one metal may be in solution and 95% of another metal may be in solution after completion of the leaching process.

After completion of the leaching step any remaining residues may optionally be removed by e.g. filtration. These residues may be any insoluble remains such as metals, papers such as e.g. non-woven layers of cellulose or synthetic polymers.

The total amount of liquid solution in relation to the alkaline black mass (measured as the ratio of g of alkaline black mass to volume in ml of solution) may be e.g. about 1/0.5, such as e.g. about 1/1, such as e.g. about 1/2, such as e.g. about 1/3, such as e.g. about 1/4, such as e.g. about 1/5, such as e.g. about 1/6, such as e.g. about 1/7, such as e.g. about 1/8, such as e.g. about 1/9, such as e.g. about 1/10. For example, in a batch were 20 g of alkaline black mass is used a total volume of about 100 ml of solution is used.

After completion of the leaching step, the pH of the resulting solution may be altered in order to remove any remaining impurities of the acidic solution. This may aid in allowing high purity manganese to be precipitated out of the solution. Preferably, this is performed by raising the pH slowly and under controlled conditions, such as incrementally increasing the pH by portion wise addition of e.g. a base during careful monitoring of the pH of the resulting solution. This process may optionally be performed under stirring. This can be done by any well known techniques in the art such as e.g. automated drop-wise addition of the base while electronically monitoring the pH of the solution under e.g. magnetic stirring.

A suitable agent that may be used for raising the pH of the leaching solution may be any base. Such a base may be, but is not limited to organic or inorganic bases such as amines or inorganic hydroxides such as e.g. sodium hydroxide or potassium hydroxide. The addition of the base is primarily in the form of an aqueous solution of appropriate concentration. Moreover, the solution may be a mix of water and any other appropriate solvent, such as e.g. an alcohol in from of methanol or ethanol. However, it is also envisaged that that the base may be attached to a solid support, such as e.g. having an organic base attached to a polymer resin, wherein the immobilized base on solid support is contacted with the leaching solution. The addition of the base to the leaching solution is performed in order to bring about a selective precipitation of the metals present as cations in the leaching solution. If e.g. an inorganic hydroxide is used as base, the metal cation is converted into its corresponding hydroxide which is depending on its chemical nature soluble or insoluble at varying pH of the leaching solution. Consequently, by monitoring the pH a selective precipitation of separate metal hydroxides can be accomplished, thereby allowing collection of separate hydroxide fraction of metals. Thus the method according to the invention does not require electrolytic separation of the metals present in the leaching solution.

The concentration of the base in solution may be in range of at least 0.5 M, such as e.g. at least about 1 M, such as e.g. at least about 2 M, such as e.g. at least about 3 M such as e.g. at least about 4 M, such as e.g. at least about 5 M, such as e.g. at least about 6 M, such as e.g. at least about 7 M, such as e.g. at least about 8 M, such as e.g. at least about 9 M, such as e.g. at least about 10 M, such as e.g. at least about 11 M, such as e.g. at least about 12 M, such as at least about 13 M, such as at least about 14 M depending on the based used.

In the method according to the invention it is important to monitor the pH during the basification of the leaching solution as the inventors of present invention have surprisingly found that precipitation of different metal oxides occur in narrow pH ranges. The impurities are found to precipitate out of the solution at a pH of about 6.5 but may also take place in a pH range of about 6.4 to about 6.7. In this pH range the manganese is still in solution.

Finally, manganese is precipitated out of the solution by raising the pH using any bases mentioned herein such as e.g. Na₂CO₃ or K₂CO₃ The pH is raised to about to about 7.6 which initiates precipitation of manganese to manganese carbonate which continues to precipitate up to a pH of about 11. Thus depending on the composition of the alkaline black mass carefully monitoring the pH may enable selective precipitation of different metals as their respective salts, wherein the salt may be e.g. the corresponding carbonate provided that a carbonate base is used.

After precipitation of, the collected solid product (e.g. the corresponding metal carbonate) may be washed.

According to the method of present invention, the aqueous solutions used during the entire process (leaching solutions and washing solutions) can be recycled, thereby minimizing the amount of waste water produced during the process and thus making the method according to the invention cost efficient and environmentally friendly.

It is to be clearly understood that all the above mentioned parameters in their respective intervals can be combined in any combinations, such as e.g. a reaction temperature in the leaching process (e.g. 50 °C) can be combined with a reaction time of e.g. 3 h, a concentration of citric acid (reducing agent) of e.g. 0.127 M, a sulphuric acid concentration of e.g. 2 M etc.

### Legends to figures

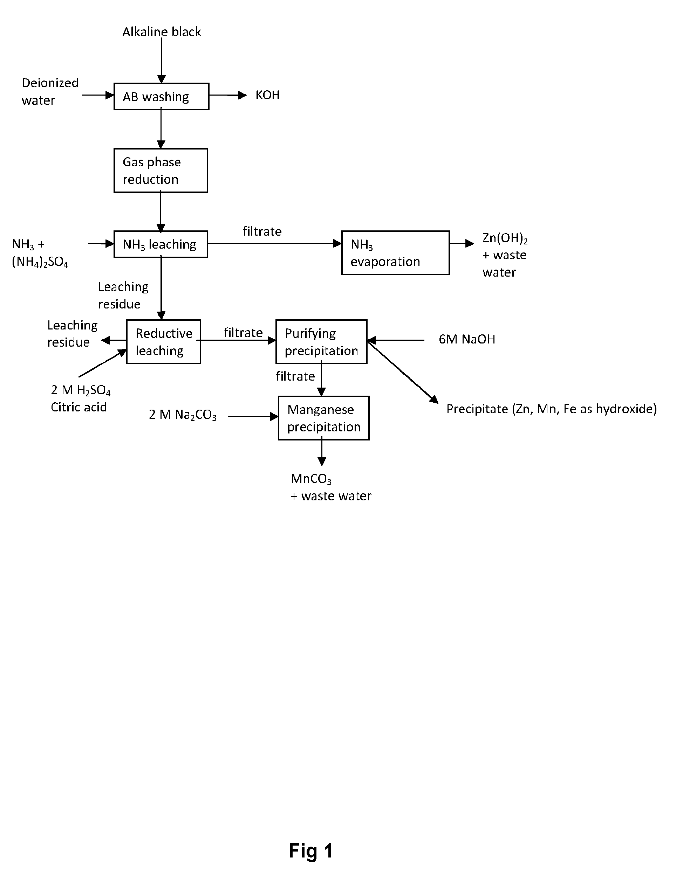

Figure 1. Illustrates the recovery process for zinc and manganese from spent alkaline batteries according to the invention

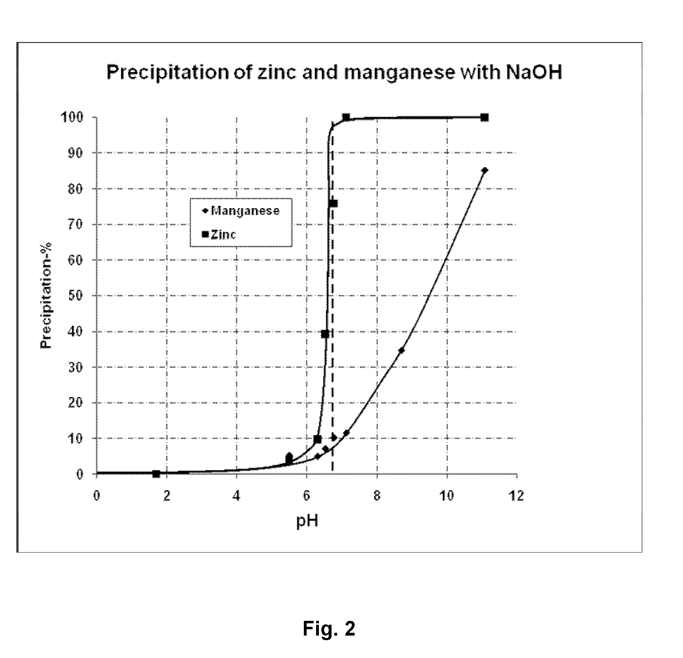

Figure 2. Illustrates the precipitation of zinc and manganese with NaOH from spent alkaline batteries (after dissolution in H₂SO₄). The figure illustrates the narrow pH interval in which zinc is precipitated when going from acidic conditions to basic conditions.

The invention is further illustrated in the examples that are not intended to limit the invention in any way.

### Examples

### Example 1

In a model experiment Alkaline Black (AB) mass of a weight of 22 g is washed with deionized water of a volume of 110 ml in order to remove any water soluble alkaline salts such as e.g. KOH. The resulting weight of the washed AB mass is 20 g.

As an optional step prior to ammonia leaching, the AB mass may undergo a gas phase reduction. In this instance, 20 g of washed AB mass is placed in a chamber. A gas mixture containing nitrogen and hydrogen is passed through the chamber at a rate of 200 ml/min with respect to nitrogen flow and 20 ml/min with respect to hydrogen flow. The temperature of the chamber is about 500°C and the reaction time is 2 h.

The washed AB mass, optionally subjected to gas phase reduction, is treated with a 2M aqueous ammonia solution and ammonium sulphate (10 g) to make up a total volume of 200 ml. The resulting mix is heated to 60°C for about 2 hours and thereafter filtered. The solvent is thereafter allowed to evaporate to afford a mix of a total volume of about 350 ml. The resulting amount of zinc hydroxide was measured to 4.57 g.

As a further step which may optionally be employed is reductive leaching of the remaining AB mass. In a model experiment 15.95 g of AB mass is mixed with sulphuric acid (2M). As the AB mass contains manganese oxide as well as zinc permanganate a reducing agent is added. Citric acid may be used as a reducing agent. In the model experiment 2.22 g of citric acid was used. The total volume of the mixture with AB mass, sulphuric acid and citric acid was 80 ml. The resulting mixture was heated to 50°C for 2 hours. The amount of solid residue was 2.0-4.5 g which was removed by filtration. The resulting solution is purified by adding about 16-20 ml of 6M NaOH solution. the total volume of the solution being about 100 ml. The solution is heated to 40°C for 1 h. The consumption of 6M NaOH was 16 ml. The impurities are precipitated out of the solution and was measured to weigh 5.89 g. The impurities were precipitated at about a pH of 6.5. As a further option a 1 M solution of Na₂S or gaseous H₂S may be used as a precipitating agent at pH below 2 in order to remove zinc from the solution as zinc sulphide. Manganese and iron in the solution is separated from the zinc sulphide by filtration. Iron is removed by oxidation at a pH of 2.5-5.5 at a temperature of 40°C. Usually this is done by bubbling air or oxygen through the solution during 1 to 4 hours. Finally, the remaining impurities are filtered from the solution. The solution is then treated with a 2M solution of sodium carbonate. the total volume of the solution was 188 ml at a temperature of 40°C for 1.5 h. the consumption of the sodium carbonate solution was 40 ml. Manganese was precipitated as manganese carbonate in an amount of 11.84 g.

## Claims

1. A method for separation of metals in the black mass of spent alkaline batteries, the method comprising the steps of;
a) providing alkaline black mass;
b) washing the alkaline black mass with deionised water;
c) optionally subjecting the washed alkaline black mass to gas phase reduction;
d) leaching the alkaline black mass with a base;
e) filtrating the resulting mix from step d) in order to collect precipitated zinc salt;

2. A method according to claim 1, further comprising the steps of:
f) subjecting the solid residue from step e) collected in the filtration step to reductive leaching by an acid in the presence of a reducing agent;
g) filtering the resulting acidic mix and purifying the filtrate by adding a base or a precipitating agent;
h) removing any precipitates from step g);
i) precipitating manganese carbonate from the filtrate by addition of a carbonate base.

3. A method according to claim 1, wherein the gas phase reduction in step c) is performed using a mix of hydrogen and an inert gas.

4. A method according to any of the preceding claims, wherein the base in step d) is ammonia.

5. A method according to any of the preceding claims, wherein the concentration of ammonia is in range of 0.1 M to about 10 M, such as e.g. about 0.5 M to about 8M, such as e.g. about 1M to about 6M, such as about 2M to about 4M, or the acid solution may be of a concentration of at least 0.5M, such as e.g. at least about 1M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M. Moreover depending on the need to dissolve the metal, the concentration of the ammonia solution may be e.g. about 1 M or such as e.g. about 2M, such as e.g. about 3M, such as e.g. about 4M, such as e.g. about 5M, such as e.g. about 6M, such as e.g. about 7M, such as e.g. about 8M, such as e.g. about 9M, such as e.g. about 10M

6. A method according to any of the preceding claims, wherein ammonium sulphate is added in step d).

7. A method according to any of the preceding claims, wherein the concentration of the ammonium sulphate in step d) is set to about 0.4 M

8. A method according to any of the preceding claims, wherein the pH of the solution in step d) is adjusted by adding an ammonia solution of about 25 % concentration, to about pH 8 to about pH 12.

9. A method according to any of the preceding claims, wherein the leaching process in step d) is performed under a period of time about 2 hours. or such as e.g. about 1 hour, or such as e.g. about 50 minutes, such as e.g. about 40 minutes, such as e.g. about 30 minutes, such as e.g. about 20 minutes, or such as e.g. about 12 hours or shorter, such as e.g. about 10 hours, such as e.g. about 8 hours, such as e.g. about 6 hours, such as e.g. 4 hours or shorter, such as e.g. about 3 hours.

10. A method according to any of the preceding claims, wherein upon completion of the leaching step d), the excess ammonia is either allowed to evaporate spontaneously or under reduced pressure at a temperature of about 60°C to about 100°C.

11. A method according to any of the preceding claims, wherein the precipitated zinc salt in step e) is zinc hydroxide.

12. A method according to any of the preceding claims, wherein the reductive leaching in step f) is performed using an acid selected from e.g. a carboxylic acids, sulphuric acid, persulphuric acid (also known as peroxymonosulfuric acid), a sulphonic acid, a sulphinic acid, nitric acid, nitrous acid, phosphoric acid, hypochlorous acid, chlorous acid, chloric acid, perchloric acid, perbromic acid, metaperiodic acid.

13. A method according to any of the preceding claims, wherein the acid is sulphuric acid.

14. A method according to any of the preceding claims, wherein the concentration of the acid in the leaching solution in step f) is the range of about 0.1 M to about 10 M, such as e.g. about 0.5 M to about 8M, such as e.g. about 1M to about 6M, such as about 2M to about 4M, or the acid solution may be of a concentration of at least 0.5M, such as e.g. at least about 1 M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M.

15. A method according to any of the preceding claims, wherein the concentration of the acid in the leaching solution in step f) is about 1M or such as e.g. about 2M, such as e.g. about 3M, such as e.g. about 4M, such as e.g. about 5M, such as e.g. about 6M, such as e.g. about 7M, such as e.g. about 8M, such as e.g. about 9M, such as e.g. about 10M.

16. A method according to any of the preceding claims, wherein the pH of the acidic leaching solution in step f) is in the range of e.g. about pH = -1 to about pH = 6, such as e.g. about pH = 0 to about pH = 5, such as e.g. about pH = 2 to about pH = 4, such as e.g. about pH = 2 to about pH = 3, or such as e.g. about pH = 1 to about pH = 2, such as e.g. about pH = 2 to about pH = 3, such as e.g. about pH = 3 to about pH = 4, or such as e.g. about pH = 4 to about pH = 5.

17. A method according to any of the preceding claims, wherein the ratio of the alkaline black mass to acid (measured as weight to weight % ratio; w/w %) of e.g. about 1 w/w%, such as e.g. about 5 w/w%, such as e.g. about 10 w/w%, such as e.g. about 15 w/w%, such as e.g. about 20 w/w%, such as e.g. about 25 w/w%, v such as e.g. about 30 w/w%, such as e.g. about 40 w/w%, such as e.g. about 50 w/w%, such as e.g. about 60 w/w%, such as e.g. about 70 w/w%, such as e.g. about 75 w/w%, as long as the molar equivalence of the acids is enough to dissolve the metals.

18. A method according to any of the preceding claims, wherein the reaction mixture during the leaching process in step f) may be in the range of e.g. about 5°C to about 100°C, such as e.g. about 10°C to about 90°C, such as e.g. about 20°C to about 80°C, such as e.g. about 30°C to about 70°C, such as e.g. about 40°C to about 60°C, or such as e.g. about 40°C to about 50°C, such as e.g. about 30°C to about 60°C.

19. A method according to any of the preceding claims, wherein the reaction time in the leaching step f) is in the range of e.g. about 30 minutes to about 24 hours, such as e.g. about 1 hour to about 10 hours, such as e.g. about 2 hours to about 3 hours, such as e.g. about 2 hours to about 9 hours such as e.g. about 3 hours to about 8 hours, such as e.g. about 4 hours to about 7 hours, such as e.g. 5 hours to about 6 hours.

20. A method according to any of the preceding claims, wherein the leaching step in f) is optionally performed in presence of a gas such as e.g. oxygen (O₂) or sulphurdioxide (SO₂).

21. A method according to any of the preceding claims, wherein the leaching step in f) is performed in presence of a reducing agent such as e.g. hydrogen peroxide (H₂O₂) or SO₂, or it may be e.g. a carboxylic acid (mono-, di- or tri- carboxylic acid) such as e.g. perbenzoic acids such as metha-chloroperbenzoic acid, citric acid, oxalic acid, malonic acid, maleic acid, fumaric acid, succinic acid, glutaric acid, adipic acid, pimelic acid, suberic acid, azaleic acid, tartaric acid, isocitric acid, aconitic acid, propane-1,2,3-tricarboxylic acid or trimesic acid or any combinations thereof

22. A method according to any of the preceding claims, wherein the reducing agent in step f)is hydrogen peroxide or citric acid.

23. A method according to any of the preceding claims, wherein the concentration of the reducing agent may be in the range of about 0.01 M to about 10 M, such as e.g. about 0.1 M to about 9M, such as e.g. about 0.12 M to about 8.5 M, such as e.g. about 0.125 M to about 8.45 M, such as e.g. 0.5 M to about 8M, such as e.g. about 1M to about 6M, such as about 2M to about 4M, or may be of a concentration of at least 0.5M, such as e.g. at least about 1M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M.

24. A method according to any of the preceding claims, wherein the ratio of the alkaline black mass to reducing agent, measured as weight to weight ratio %; is e.g. about 1 w/w%, such as e.g. such as about 2 w/w %, such as e.g. about 3 w/w%, such as e.g. about 5 w/w%, such as e.g. about 10 w/w%, such as e.g. about 15 w/w%, such as e.g. about 20 w/w%, such as e.g. about 25 w/w%, v such as e.g. about 30 w/w%, such as e.g. about 40 w/w%, such as e.g. about 50 w/w%, such as e.g. about 60 w/w%, such as e.g. about 70 w/w%, such as e.g. about 75 w/w%, as long as the molar equivalence of the acids is enough to dissolve the metals.

25. A method according to any of the preceding claims, wherein the ratio between the weight of alkaline black mass (in grams) to total liquid content in the leaching solution in step f) is e.g. about 1/0.5, such as e.g. about 1/1, such as e.g. about 1/2, such as e.g. about 1/3, such as e.g. about 1/4, such as e.g. about 1/5, such as e.g. about 1/6, such as e.g. about 1/7, such as e.g. about 1/8, such as e.g. about 1/9, such as e.g. about 1/10.

26. A method according to any of the preceding claims, wherein the base in step g) is an organic or inorganic base such as e.g. amines or inorganic hydroxides such as e.g. sodium hydroxide or potassium hydroxide.

27. A method according to any of the preceding claims, wherein the concentration of the base in solution may be in range of at least 0.5M, such as e.g. at least about 1M, such as e.g. at least about 2M, such as e.g. at least about 3M such as e.g. at least about 4M, such as e.g. at least about 5M, such as e.g. at least about 6M, such as e.g. at least about 7M, such as e.g. at least about 8M, such as e.g. at least about 9M, such as e.g. at least about 10M, such as e.g. at least about 11M, such as e.g. at least about 12M, such as at least about 13M, such as at least about 14M depending on the based used.

28. A method according to any of the preceding claims, wherein the base in step g) is added slowly under controlled conditions while monitoring the pH of the solution and allowing the pH to equilibrate between additions of the base.

29. A method according to any of the preceding claims, wherein the metals present in the leaching step g) are precipitated in a pH interval of about 6.4 to about 6.7.

30. A method according to any of the preceding claims, wherein the precipitating agent in step g) is sodium sulphide in order to remove zinc as zinc sulphide.

31. A method according to any of the preceding claims, wherein the concentration of the sodium sulphide in step g) is about 1M

32. A method according to any of the preceding claims, wherein the precipitating agent in step g) is oxygen or air which is bubbled through the solution in order to remove iron at pH in range of about e.g. 2.5 to about 5.5.

33. A method according to any of the preceding claims, wherein the carbonate base used in step i) is e.g. sodium carbonate or potassium carbonate.

34. A method according to any of the preceding claims, wherein the manganese is precipitated in step i) as manganese carbonate at a pH interval of about 7.6 to about 14.

35. A method according to any of the preceding claims, wherein the temperature in step i) is about 40°C.
